# EUROPÄISCHE PATENTSCHRIFT

(11) **EP 0 356 390 B1**
(45) Veröffentlichungstag und Bekanntmachung des Hinweises auf die Patenterteilung: **07.09.1994**
(21) Anmeldenummer: 89810604.2
(22) Anmeldetag: 15.08.1989
(51) Int. Cl.: C08K 5/17, C09B 67/18, C08K 5/34, C09B 67/00

(54) **Pigmentierte thermoplastische Harze**
Pigmented thermoplastic resins
Résines thermoplastiques pigmentées

(30) Priorität: 22.08.1988 GB 8819890
(43) Veröffentlichungstag der Anmeldung: 28.02.1990
(73) Patentinhaber: CIBA-GEIGY AG, 4002 Basel (CH)
(72) Erfinder: Langley, Robert, Glasgow Schottland G77 5AS (GB)

(56) Entgegenhaltungen:
- CHEMICAL ABSTRACTS, vol. 110, no. 6, 06 Februar 1989 Columbus, Ohio, USA& JP-A-63156862 (NIPPON OILS AND FATS CO.) 29-06-1988 Seite 37; ref. no. 39892G

## Beschreibung

Die vorliegende Erfindung betrifft pigmentierte thermoplastische Harze, worin das Pigment durch Zusatz eines substituierten Phthalocyanins hitzestabilisiert wird.

In JP-A Sho 62-270655 wird beschrieben, dass bestimmte Dialkylaminoderivate von Kupferphthalocyanin als Antiflockungsmittel wirken (d.h. die Bildung einer homogenen Harz/Pigment-Mischung erleichtern), wenn sie zusammen mit einem Phthalocyaninpigment in einem thermohärtbaren Polyesterharz eingearbeitet werden.

Es wurde nun gefunden, dass die Einarbeitung einer kleineren stabilisierenden Menge eines Dimethylaminomethyl-kupferphthalocyanins zusammen mit einem Phthalocyaninpigment in ein thermoplastisches Harz, dem Pigment des pigmentierten Harzsystems eine ausserordentliche Hitzestabilität verleiht.

Die vorliegende Erfindung betrifft demnach eine thermoplastische Harzzusammensetzung enthaltend
A) ein thermoplastisches Harz,
B) ein Metallphthalocyaninpigment und
C) 0,5 bis 30 Gew.%, bezogen auf das Pigment B) eines als Hitzestabilisator für die Komponente B wirkenden Dimethylaminomethyl-kupferphthalocyanins der Formel 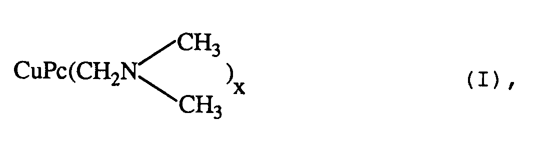 worin CuPc ein unsubstituierter oder durch bis zu vier Chlor oder Bromatome oder durch eine Sulfosäuregruppe substituierter Kupferphthalocyaninrest ist und x einen Wert zwischen 0,1 und 4,0 bedeutet, oder einer Mischung von Verbindungen der Formel I mit verschiedenen x-Werten.

Der Kupferphthalocyaninrest ist vorzugsweise nur durch ein Chlor- oder Bromatom substituiert und ist besonders bevorzugt weder durch Chlor noch durch Brom, noch durch eine Sulfonsäuregruppe substituiert.

x ist bevorzugt ein Wert zwischen 1,0 und 3,0.

Das thermoplastische Harz (A) kann Polyethylen hoher Dichte (HDPE), Polypropylen (PP) oder einer der sogenannten Ingenieurwerkstoffe (Engineering Plastics) sein, wie z.B. Polyethylenterephthalat (PETP), Polybutyleneterephthalat (PBTP), Polycarbonat (PC), Polyamid (PA), Polyphenylenoxid (PPO), Polyether-Etherketon (PEEK), Polyphenylensulfid (PPS), Polyethersulfon (PES), Acrylnitril-Butadien-Styrol-Copolymere (ABS), Polystyrol (PS), modifizierter Polyphenylenether, Polyacetal (POM) und deren Legierungen, wie z.B. eine PC/PBTP-Legierung.

Das Metallphthalocyanin-Basispigment (B) kann chloriert oder unchloriert sein. Ist es chloriert, so kann es bis zu 6 Gew.%, bevorzugt 1 bis 4 Gew.% Chlor enthalten. Besonders bevorzugt ist das Phthalocyanin (B) unchloriert, insbesondere unchloriertes Kupferphthalocyanin.

Die Pigmentkomponente (B) ist in der erfindungsgemässen Harzzusammensetzung in einer Menge von bis zu 30 Gew.%, bevorzugt von 0,001 bis 3 Gew.%, bezogen auf die Komponente (A) vorhanden.

Die Verbindungen der Formel I sind bekannt und können z.B. durch Umsetzung von Aminomethyl-Kupferphthalocyanin entweder a) mit konzentrierter Ameisensäure bei Normaldruck (GB 724 212) oder b) mit verdünnter Ameisensäure bei erhöhtem Druck (US 4 810 297) hergestellt werden.

Eine bevorzugte Herstellungsmethode der Verbindungen der Formel I besteht allerdings in der Umsetzung von Aminomethyl-Kupferphthalocyanin, welches durchschnittlich 1 bis 4 Aminomethylgruppen enthält, mit Formaldehyd und 2-60%ige wässrige Ameisensäure bei Normaldruck und erhöhter Temperatur. Dieses Verfahren ist detailliert in EP-A 311 562 beschrieben.

Die Vebindung der Formel I (Komponente C), bzw. die Mischung von Verbindungen der Formel I mit verschiedenen x-Werten, wird zweckmässig in das rohe Basis-Metallphthalocyaninpigment (Komponente B) während der Konditionierung des letzteren eingearbeitet und die erhaltene Mischung wird anschliessend in das thermoplastische Harz einverleibt. Bevorzugt werden 0,5 bis 30 Gew.%, insbesondere 3 bis 15 Gew.% der Verbindung der Formel I oder der Mischung verschiedener solcher Verbindungen, bezogen auf das Metallphthalocyanin, in das Metallphthalocyanin (B) eingearbeitet.

Die Konditionierung oder Umwandlung des rohen Basis-Phthalocyaninpigments in die Pigmentform kann durch Mischen des rohen Phthalocyanins mit der Verbindung Imidomethylphthalocyanin der Fomel I und Mahlen der Mischung erfolgen. Die Mahlung wird in Gegenwart eines Mahlhilfsmittels in fester Partikelform durchgeführt, welches nach dem Mahlvorgang entfernt werden kann. Beim Mahlhilfsmittel in fester Partikelform kann es sich um ein Alkali- oder Erdalkalimetallsalz einer Mineralsäure handeln, wie z.B. Natrium- oder Calciumchlorid. Es kann in einer Menge bis zu einem Maximum von 500 Gew.%, bezogen auf die Gesamtmenge der Phthalocyanin-Zusammensetzung eingesetzt werden. Zusätzlich kann auch ein Alkalimetallsalz einer organischen Säure (z.B.Natriumacetat) in einer Menge zwischen 2,5 und 25 Gew.%, bezogen auf das Mahlhilfsmittel, während des Mahlprozesses eingesetzt werden.

Wenn das als Ausgangsprodukt eingesetzte rohe Phthalocyanin Kupferphthalocyanin ist, führt die obenerwähnte Konditionierung zu einem stabilen Kupferphthalocyanin in Pigmentform, welches vorwiegend in der Alpha-Kristallmodifikation vorliegt. Wenn es erwünscht ist, das rohe Kupferphthalocyanin in einer Pigmentform der Beta-Kristallmodifikation umzuwandeln, so ist es zweckmässig die Mahlung in Gegenwart von 0,5 bis 10 Gew.% einer organischen Flüssigkeit, wie z.B. Diethylanilin, bezogen auf die gesamte Kupferphthalocyaninzusammen setzung, vorzunehmen.

Eine zweite Methode zur Herstellung von Phthalocyanin in Pigmentform mit der gewünschten Partikelgrösse und mit erhöhten koloristischen Eigenschaften besteht in der Mahlung und Behandlung des Basis-Phthalocyaninmaterials mit einem polaren zumindest teilweise im Wasser mischbaren organischen Lösungsmittels, wie z.B. Isopropanol. Die Verbindung der Formel I kann jederzeit, während der Konditionierung einverleibt werden.

Eine weitere Methode zur Umwandlung des rohen Phthalocyanin-Ausgangsmaterials in die Pigmentform besteht darin, das rohe Phthalocyanin mit der Verbindung der Formel I zu mischen, der Mischung konzentrierte Schwefelsäure zuzugeben und das Phthalocyanin durch Eintragen der Schwefelsäurelösung oder -aufschlämmung in Wasser wieder auszufällen.

Die Menge an einzusetzender konzentrierter Schwefelsäure kann zwischen 200 und 1500 Gew.%, bezogen auf die gesamte Phthalocyaninzusammensetzung, variieren und die Säurebehandlung kann bei Temperaturen zwischen 0 und 100°C, bevorzugt zwischen 40 und 80°C vorgenommen werden.

Wenn erwünscht kann auch ein oberflächenaktives Mittel dem Wasser vor dem Eintragen der sauren Lösung oder Aufschlämmung zugegeben werden, zweckmässig in einer Menge von 0,5 bis 10 Gew.%, bezogen auf die Gesamtmenge der Phthalocyaninzusammensetzung. Ein geeignetes oberflächenaktives Mittel ist Dodecylbenzolsulfonsäure.

Wird als Ausgangsmaterial rohes Kupferphthalocyanin verwendet, so ergibt die obenerwähnte saure Konditionierung ein stabiles Alpha-Kupferphthalocyanin in Pigmentform. Es kann, wenn erwünscht, einer Mahlung unterworfen werden, z.B. wie oben beschrieben, um ein Pigment bestimmter Partikelgrösse zu erhalten.

Eine vierte alternative Methode für die Umwandlung des rohen Phthalocyanins in die Pigmentform besteht darin, dass das rohe Phthalocyanin allein mit der konzentrierten Schwefelsäure behandelt wird und danach durch Eintragen der Lösung in Wasser wieder ausgefällt wird, das erhaltene Produkt z.B. wie oben beschrieben gemahlen wird, wobei die Verbindung der Formel I während des Mahlprozesses oder in einem späteren Zeitpunkt der Konditionierung einverleibt wird.

Die Zusammensetzung in Pigmentform enthaltend das Metallphthalocyanin (B) und die Verbindung der Formel I kann in das thermoplastische Harz nach allgemein üblichen Methoden eingearbeitet werden.

Die folgenden Beispiele erläutern die Erfindung. Prozente bedeuten dabei jeweils Gewichtsprozente.

### Beispiel 1:

### a) Herstellung von Aminomethyl-kupferphthalocyanin

34 g 100 % Phthalimidomethyl-kupferphthalocyanin (enthaltend etwa 2,5 Phthalimidomethylgruppen pro Kupferphthalocyaninmolekül) in Form eines Filterkuchens werden bei 90°C in 100 g Wasser aufgeschlämmt. Wenn eine geschmeidige, homogene, klumpenfreie Paste erhalten ist, werden 15 g 98-100%iges Hydrazinhydrat zugegeben und die Mischung 8 Stunden unter Rühren in einem auf 130°C gehaltenen Ölbad am Rückfluss gekocht. Nach dem Abkühlen wird die Mischung mit Wasser verdünnt und der pH mit Ammoniaklösung (0,8 s.G.) auf 9,0 eingestellt. Das Produkt wird filtriert und mit 1%igem wässrigem Ammoniak gewaschen. Wenn erwünscht kann das erhaltene Aminomethyl-kupferphthalocyanin bei 60°C getrocknet werden.

### b) Herstellung von Dimethylamino-kupferphthalocyanin

100 g eines Presskuchens (27 % Festkörpergehalt) des gemäss a) hergestellten Aminomethyl-kupferphthalocyanins (enthaltend etwa 2,5 Aminomethylgruppen pro Kupferphthalocyaninmolekül) werden mit 80 g 98%iger Ameisensäure und 187 g Wasser bei 90°C vermischt und homogen gerührt. Dann werden 18 g 40%iges wässriges Formaldehyd zugegeben. Man erhält so eine 22,4%ige Ameisensäurelösung. Die Mischung wird 6 Stunden auf 95°C erhitzt, anschliessend in 500 g kaltes Wasser gegossen und mit kaltem Wasser auf 1 Liter aufgefüllt. Der pH wird mit Ammoniaklösung (0,8 s.G.) auf 8.0 eingestellt. Das erhaltene Produkt wird abfiltriert, mit 5 l kaltem Wasser enthaltend 1 % Ammoniak gewaschen und bei 60°C getrocknet. Ausbeute 27,1 g in Filterkuchenform.

### c) Einarbeitung des Additives ins Pigment

In eine wässrige Aufschlämmung von 10 g β-Kupferphthalocyanin in 100 g Wasser wird 1 g Dimethylamino-kupferphthalocyanin (hergestellt gemäss b)), das zuvor in 20 g Wasser dispergiert wurde, gegeben. Danach wird wässrige Salzsäure bis zum pH 1 zugegeben. Nach einer Stunde Rühren bei 60°C wird das Pigment durch Filtrieren isoliert, neutral gewaschen und bei 60°C getrocknet.

### d) Einarbeitung des stabilisierten Pigments in HDPE und Hitzebeständigkeits-Bestimmung

Das gemäss c) hergestellt Pigment wird vermahlen und durch ein Sieb mit 150 µm Maschenweite gesiebt. In eine Zweiwalzenmühle, deren Walzen bei Walzenabstand von 0,3 mm auf 150 bzw. 110°C geheizt werden, werden 100 g Polyethylen hoher Dichte eingeführt. Das Polymere wird eine Minute im Walzenstuhl gemahlen, dann wird 1,0 g feinpulveriges Titandioxid innerhalb 30 Sekunden auf das Polymere gestreut, welches 30 Sekunden weitervermahlen (Schneiden, Falten) wird. Danach wird 0,1 g blaues Pigment innerhalb 30 Sekunden auf das Polymere gestreut. Nach dem Mahlen (Schneiden, Falten) während 8 Minuten wird der Walzenabstand auf 1,5 mm eingestellt und die Folie wird abgezogen, auf Raumtemperatur abkühlen gelassen und abgeschnitzelt.

Das abgeschnitzelte Material wird in der Spritzgussmaschine bei 200°C zu Formstücken verspritzt, welche eine farbstarke blaue Nuance aufweisen. Das Verfahren wird mehrmals wiederholt, wobei die Temperatur der Spritzgussmaschine jedes Mal um 20°C erhöht wird, bis 320°C erreicht werden (5 Minuten Verweilzeit bei jeder Temperatur). Die stark blaue Farbe bleibt bis zu einer erheblich höheren Temperatur erhalten, als in den Fällen, wo das Pigment wie in (c) beschrieben hergestellt wird, aber ohne Beimengung von Dimethylaminomethyl-kupferphthalocyanin.

Beispiel 2: Die gemäss Beispiel 1c) hergestellte Pigmentzusammensetzung wird vermahlen und durch ein Sieb mit 150 µm Maschenweite gesiebt. Eine homogene Mischung aus 100 g Polybutylenterephthalat-Harz, 1,0 g fein gepulvertes Titandioxid und 0,2 g Pigment wird bei 260°C extrudiert und granuliert. Das erhaltene Granulat wird in einer Spritzgussmaschine bei 260°C zu Formstücken verspritzt, welche eine farbstarke blaue Nuance aufweisen. Das Spritzgussverfahren wird bei 260, 275 und 290°C mit jeweiliger Verweilzeit von 5 Minuten wiederholt. Die blaue Farbe bleibt bis zur höchsten Temperaturstufe auf ein erheblich höheres Gleichmässigkeitsniveau als bei Produkten bei denen kein Dimethylaminomethylkupferphthalocyanin eingearbeitet wird.

Beispiel 3: Die gemäss Beispiel 1c) hergestellte Pigmentzusammensetzung wird vermahlen und durch ein Sieb mit 150 µm Maschenweite gesiebt. Eine homogene Mischung aus 100 g Polycarbonat/Polybutylenterephthalat-Legierung und 0,1 g Pigment wird bei 260°C extrudiert und granuliert. Das erhaltene Granulat wird in einer Spritzgussmaschine bei 260°C zu Formstücken verspritzt, welche eine farbstarke blaue Nuance aufweisen. Das Spritzgussverfahren wird bei 260, 270, 280, 290 und 300°C mit jeweiliger Verweilzeit von 5 Minuten wiederholt. Die blaue Farbe bleibt bis zur höchsten Temperaturstufe auf ein erheblich höheres Gleichmässigkeitsniveau als bei Produkten bei denen kein Dimethylaminomethyl-kupferphthalocyanin eingearbeitet wird.

### Beispiel 4:

### a) Herstellung von chlorierten Aminomethylkupferphtalocyanin

40 g 100%iges Phthalimidomethyl-kupferphthalocyanin (enthaltend etwa 1,5 Phthaloimidomethylgruppen und 0,3 Chloratome pro Kupferphthalocyaninmolekül) werden als Filterkuchen in 226 g Wasser gegeben. Nach 14 Stunden werden weitere 100 g Wasser gefolgt von 46,5 g 50%iger Kalilauge zugegeben. Die Dispersion wird eine Stunde bei 90-95°C gerührt, dann werden 240 g kaltes Wasser zugegeben und die Mischung wird 15 Minuten weitergerührt. Danach werden innerhalb 15 Minuten 369 g 4M-Schwefelsäure zugegeben und die Mischung wird 4 Stunden bei 90-95°C gerührt. Schliesslich werden 200 g kaltes Wasser zugegeben, die Aufschlämmung filtriert und der Filterkuchen mit heissem Wasser neutral gewaschen. Man erhält 232 g chloriertes Aminomethyl-kupferphthalocyanin als Filterkuchen mit 15,7 % Festkörpergehalt.

### b) Herstellung von chlorierten Dimethylaminomethylkupferphthalocyanin

128 g gemäss Beispiel 4a) erhaltenen Presskuchens (20 g Trockengewicht) werden mit 90 g Wasser und 59,8 g 98%ige Ameisensäure gemischt und bei 90°C homogen gerührt. Dann werden 13,3 g 40%iges wässriges Formaldehyd zugegeben. Die Mischung wird 6 Sekunden unter Rühren auf 95°C erhitzt. Die heisse Aufschlämmung wird anschliessend in 500 g kaltes Wasser gegossen und mit kaltem Wasser auf 1 Liter aufgefüllt. Der pH wird mit Ammoniaklösung (0,8 s.G.) auf 8,0 eingestellt. Das abfiltrierte und gewaschene Produkt wird als Filterkuchen isoliert. Ausbeute: 17,4 g Trockengewicht.

### c) Einarbeitung des Additivs ins Pigment

Das Produkt von Beispiel 4b) wird in einer Konzentration von 5 Gew.% (0,65 g Trockengewicht) in eine wässrige Aufschlämmung von β-Kupferphthalocyanin (enthaltend 13 g Pigment) bei 60°C dispergiert. Dann wird wässrige Salzsäure bis pH 1 zugegeben und die Mischung 1 Stunde gerührt. Das Pigment wird durch Filtrieren isoliert, neutral gewaschen und bei 60°C getrocknet.

### d) Einarbeitung des stabilisierten Pigments in Polystyrol und Hitzebeständigkeits-Bestimmung

Das gemäss Beispiel 4c) hergestellte Pigment wird mit Analogie zu dem in Beispiel 1d) beschriebenen Verfahren in einer Konzentration von 0,1 % in Polystyrol eingearbeitet. Die stark blaue Farbe bleibt bis zu einer erheblich höheren Temperatur erhalten, als in den Fällen, wo das Pigment wie in Beispiel 4c) beschrieben hergestellt wird, aber ohne Beimengung von chloriertem Dimethylaminomethyl-kuperphthalocyanin.

Beispiel 5: Die gemäss Beispiel 1c) hergestellte Pigmentzusammensetzung wird in Analogie zu dem in Beispiel 1d) beschriebenen Verfahren in einer Konzentration von 0,1 % in Polypropylen eingearbeitet. Die stark blaue Farbe bleibt bis zu einer erheblich höheren Temperatur erhalten, als in den Fällen, wo das Pigment wie in Beispiel 1c) beschrieben hergestellt wird, aber ohne Beimengung von Dimethylaminomethylkupferphthalocyanin.

Beispiel 6: Die gemäss Beispiel 1c) hergestellte Pigmentzusammensetzung wird in Analogie zu dem in Beispiel 1d) beschriebenen Verfahren in einer Konzentration von 0,1 % in Polystyrol eingearbeitet. Die stark blaue Farbe bleibt bis zu einer erheblich höheren Temperatur erhalten, als in den Fällen, wo das Pigment wie in Beispiel 1c) beschrieben hergestellt wird, aber ohne Beimengung von Phthalimidomethylkupfer-phthalocyanin.

Beispiel 7: Die gemäss Beispiel 1c) hergestellte Pigmentzusammensetzung wird in Analogie zu dem in Beispiel 1d) beschriebenen Verfahren in einer Konzentration von 0,1 % in ABS (Acrylonitril-Butadien-Styrol-Copolymere) eingearbeitet. Die stark blaue Farbe bleibt bis zu einer erheblich höheren Temperatur erhalten, als in den Fällen, wo das Pigment wie in Beispiel 1c) beschrieben hergestellt wird, aber ohne Beimengung von Phthalimidomethyl-kupferphthalocyanin.

## Patentansprüche

1. Thermoplastische Harzzusammensetzung enthaltend
A) ein thermoplastisches Harz,
B) ein Metallphthalocyaninpigment und
C) 0,5 bis 30 Gew.%, bezogen auf das Pigment B) eines als Hitzestabilisator für die Komponente B wirkenden Dimethylaminomethyl-kupferphthalocyanins der Formel 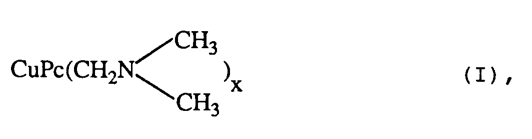 worin CuPc ein unsubstituierter oder durch bis zu vier Chlor oder Bromatome oder durch eine Sulfosäuregruppe substituierter Kupferphthalocyaninrest ist und x einen Wert zwischen 0,1 und 4,0 bedeutet, oder einer Mischung von Verbindungen der Formel I mit verschiedenen x-Werten.

2. Harzzusammensetzung gemäss Anspruch 1, worin CuPc ein Kupferphthalocyaninrest ist, der weder durch Chlor, noch durch Brom, noch durch eine Sulfonsäuregruppe substituiert ist.

3. Harzzusammensetzung gemäss Anspruch 1, worin x ein Wert zwischen 1,0 und 3,0 ist.

4. Harzzusammensetzung gemäss Anspruch 1, worin das thermoplastische Harz (A) Polyethylen hoher Dichte, Polypropylen oder Polyethylenterephthalat, Polybutylenterephthalat, Polycarbonat, Polyamid, Polyphenylenoxid, Polyether-Etherketon, Polyphenylensulfid, Polyethersulfon, Acrylnitril-Butadien-Styrol-Copolymere, Polystyrol, modifiziertes Polyphenlyenether, Polyacetal oder eine Legierung davon ist.

5. Harzzusammensetzung gemäss Anspruch 1, worin das Metallphthalocyanin (B) unchloriertes Kupferphthalocyanin ist.

6. Harzzusammensetzung gemäss Anspruch 1, worin das Metallphthalocyanin (B) in einer Menge von bis zu 30 Gew.%, bezogen auf die Komponente (A), vorhanden ist.

7. Harzzusammensetzung gemäss Anspruch 6, worin das Metallphthalocyanin (B) in einer Menge von 0,001 bis 3 Gew.%, bezogen auf die Komponente (A), vorhanden ist.

8. Verfahren zur Hitzestabilisierung eines Pigments in einem pigmentierten thermoplastischen Harz, durch Einarbeitung eines Metallphthalocyaninpigments und, als Hitzestabilisator für das Metallphthalocyaninpigment, 0,5 bis 30 Gew.% einer Verbindung der Formel I gemäss der in Anspruch 1 angegebenen Definition, oder einer Mischung von Verbindungen der Formel I mit verschiedenen x-Werten, bezogen auf das Metallphthalocyaninpigment, in das thermoplastische Harz.

9. Verfahren gemäss Anspruch 8, worin die Verbindung oder die Mischung von Verbindungen der Formel I in das rohe Basis-Metallphthalocyaninpigment während der Konditionierung des letzteren eingearbeitet wird und die erhaltene Mischung anschliessend in das thermoplastische Harzeinverleibt wird.

## Claims

1. A thermoplastic resin composition comprising
A) a thermoplastic resin,
B) a metal phthalocyanine pigment and
c) 0.5 to 30 % by weight, based on the pigment B), of a dimethylaminomethyl copper phthalocyanine acting as heat stabilizer for component B and having the formula 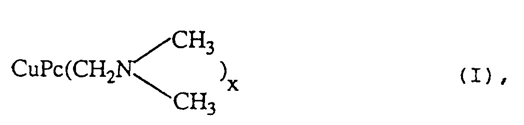 in which CuPc is a copper phthalocyanine radical which is unsubstituted or substituted by up to 4 chlorine or bromine atoms, or by a sulfonic acid group, and x is a value within the range of from 0.1 to 4.0, or of a mixture of compounds of formula I having different values of x.

2. A resin composition according to claim 1, in which CuPc is a copper phthalocyanine radical which is not substituted by chlorine or bromine or by a sulfonic acid group.

3. A resin composition according to claim 1, in which x is a value within the range of from 1.0 to 3.0.

4. A resin composition according to claim 1, in which the thermoplastic resin (A) is high density polyethylene, polypropylene or polyethylene terephthalate, polybutylene terephthalate, polycarbonate, polyamide, polyphenylene oxide, polyether-ether ketone, polyphenylene sulfide, polyether sulfone, acrylonitrile-butadiene-styrene copolymer, polystyrene, modified polyphenylene ether, polyacetal or an alloy of these plastics.

5. A resin composition according to claim 1, in which the metal phthalocyanine (B) is unchlorinated copper phthalocyanine.

6. A resin composition according to claim 1, in which the metal phthalocyanine (B) is present in an amount of up to 30 % by weight, based on component (A).

7. A resin composition according to claim 6, in which the metal phthalocyanine (B) is present in an amount of from 0.001 to 3 % by weight, based on component (A).

8. A process for heat stabilizing a pigment in a pigmented thermoplastic resin, by incorporating into the thermoplastic resin a metal phthalocyanine pigment and, as heat stabilizer for the metal phthalocyanine pigment, 0.5 to 30 % by weight, based on the metal phthalocyanine pigment, of a compound of formula I, as defined in claim 1, or of a mixture of compounds of formula I having different x values.

9. A process according to claim 8, in which the compound or the mixture of compounds of formula I is incorporated into the crude metal phthalocyanine base pigment during conditioning of the latter, and the mixture obtained is subsequently incorporated into the thermoplastic resin.

## Revendications

1. Composition de résine thermoplastique, contenant :
A) une résine thermoplastique,
B) un pigment à base de phtalocyanine de métal, et
C) 0,5 à 30 % en poids, par rapport au pigment (B) d'une diméthylamino phtalocyanine de cuivre, jouant pour le composant (B) le rôle d'un stabilisant à l'égard de la chaleur et répondant à la formule : 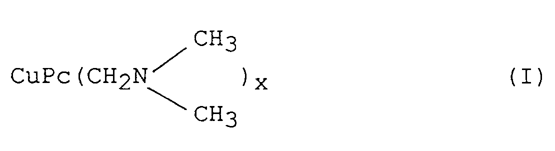 (dans laquelle CuPc représente un reste phtalocyanine de cuivre non substituée ou substituée par jusqu'à 4 atomes de chlore ou de brome ou par un groupe acide sulfonique, et x a une valeur comprise entre 0,1 et 4,0) ou un mélange de composés de formule I présentant différentes valeurs de x.

2. Composition de résine selon la revendication 1, dans laquelle CuPc est un reste phtalocyanine de cuivre qui n'est substituée ni par du chlore ni par du brome, ni par un groupe acide sulfonique.

3. Composition de résine selon la revendication 1, dans le cas de laquelle x a une valeur comprise entre 1,0 et 3,0.

4. Composition de résine selon la revendication 1, dans le cas de laquelle la résine thermoplastique (A) est du polyéthylène à haute densité, du polypropylène ou du poly(téréphtalate d'éthylène), du poly(téréphtalate de butylène), du polycarbonate, du polyamide, du poly(oxyde de phénylène), de la polyéther éther cétone, du poly(sulfure de phénylène), de la polyéther sulfone, un copolymère d'acrylonitrile-butadiène-styrène, du polystyrène, du poly(éther de phénylène) modifié, du polyacétal ou un de leurs alliages.

5. Composition de résine selon la revendication 1, dans le cas de laquelle la phtalocyanine de métal (B) est une phtalocyanine de cuivre non chlorée.

6. Composition de résine selon la revendication 1, dans le cas de laquelle la phtalocyanine de métal (B) est présente en une quantité allant jusqu'à 30 % en poids, par rapport au composant (A).

7. Composition de résine selon la revendication 6, dans le cas de laquelle la phtalocyanine de métal (B) est présente en une quantité de 0,001 à 3 % en poids, par rapport au composant (A).

8. Procédé pour stabiliser à l'égard de la chaleur un pigment dans une résine thermoplastique pigmentée, par incorporation d'un pigment à base de phtalocyanine de métal, et comme agent de stabilisation du pigment de phtalocyanine de métal à l'égard de la chaleur, de 0,5 à 30 % en poids d'un composé de formule I répondant à la définition indiquée à la revendication 1, ou d'un mélange de composés de formule I présentant diverses valeurs de x, par rapport au pigment de phtalocyanine de métal, dans la résine thermoplastique .

9. Procédé selon la revendication 8, dans lequel le composé ou le mélange de composés de formule I est incorporé dans le pigment de phtalocyanine de métal de base brute pendant le conditionnement de ce pigment et le mélange obtenu est ensuite incorporé à la résine thermoplastique.
